# EUROPEAN PATENT SPECIFICATION

(11) **EP 4 151 529 B1**
(45) Date of publication and mention of the grant of the patent: **07.08.2024**
(21) Application number: 22190981.5
(22) Date of filing: 18.08.2022
(51) Int. Cl.: B64D 13/06, B64D 37/30, B64D 37/34

(54) **CRYOGENIC FUEL COOLED ECS PRECOOLER**
MIT KRYOGENEM BRENNSTOFF GEKÜHLTER ECS-VORKÜHLER
PRÉ-REFROIDISSEUR ECS REFROIDI PAR CARBURANT CRYOGÉNIQUE

(30) Priority: 10.09.2021 US 202117471312
(43) Date of publication of application: 22.03.2023
(73) Proprietor: Hamilton Sundstrand Corporation, Charlotte, NC 28217-4578 (US)
(72) Inventor: RANJAN, Ram, West Hartford, 06117 (US); PEARSON, Matthew Robert, West Hartford, CT, 06106 (US); TURNEY, Joseph, Amston, 06321 (US)
(74) Representative: Dehns

(56) References cited:
- FR-A1- 3 110 895
- US-A1- 2021 207 540

## Description

### TECHNICAL FIELD

The present disclosure generally relates to cooling schemes for aircraft ECS and using cryogenic fuels for cooling ECS air.

### BACKGROUND

Aircraft are equipped with environmental control systems (ECS) that are configured to treat and supply treated air to a cabin of the aircraft. Such environmental control systems are conventionally driven by bleed air from the engine and utilize a precooler heat exchanger that cools the bleed air from about 450 °C to lower than 250 °C before the bleed air is introduced to the rest of the environmental control system components. These precoolers typically use engine fan duct air to cool the pressurized bleed air (i.e., both the pressurized air and the cooling fan duct air are extract from the engine). Such configurations thus use space in the fan duct leading to drag on the engine. Improved ECS and cooling systems can improve engine and aircraft efficiencies.

In the present description, the unit psi is used. The conversion factor to Pascal (SI unit) is : 1 psi = 6890 Pa.

Document US2021 207540 describes a cryogenic fuel auxiliary power system for an engine including a cryogenic fuel supply, a first valve in fluid communication with the cryogenic fuel supply and configured to control a fuel flow, a first heat exchanger, configured to receive the fuel flow, in fluid communication with the first valve and a combustion chamber of the engine, and a fuel cell in fluid communication between the first valve and the first heat exchanger.

### BRIEF DESCRIPTION

According to the invention, aircraft systems are provided. The aircraft systems include a fuel tank containing a cryogenic fuel, an engine configured to consume the cryogenic fuel, and an environmental control system including a precooler arranged along a flow path between the fuel tank and the engine, the precooler configured to receive the cryogenic fuel as a first working fluid and engine bleed air as a second working fluid. The precooler includes a first heat exchanger configured to receive the cryogenic fuel at a first state and output the cryogenic fuel at a second state, and a second heat exchanger configured to receive the cryogenic fuel at the second state and output the cryogenic fuel at a third state. The first state of the fuel has a first density, the second state of the fuel has a second density, and the third state of the fuel has a third density, wherein the first density is greater than the second density, and the second density is greater than the third density. The engine bleed air is directed through the second heat exchanger of the precooler first and then through the first heat exchanger of the precooler.

Optionally, the aircraft systems may include that the first density is at least two times greater than the second density and the second density is at least two times greater than the third density.

Optionally, the aircraft systems may include that the engine bleed air is high pressure bleed air extracted from a high pressure compressor section of the engine.

Optionally, the aircraft systems may include that the engine bleed air has a temperature of about 470 °C when entering the second heat exchanger and has a temperature of 240 °C or less when exiting the first heat exchanger.

Optionally, the aircraft systems may include that the first state of the fuel is a cryogenic fuel having a temperature of about -250 °C and a pressure of about 145 psi.

Optionally, the aircraft systems may include that the second state of the fuel has a temperature of about -220 °C and a pressure of about 145 psi.

Optionally, the aircraft systems may include that the third state of the fuel has a temperature of about -110 °C and a pressure of about 145 psi.

Optionally, the aircraft systems may include that the first state of the fuel is a cryogenic fuel having a temperature of about -250 °C and a pressure of about 1450 psi.

Optionally, the aircraft systems may include that the second state of the fuel has a temperature of about -220 °C and a pressure of about 1450 psi.

Optionally, the aircraft systems may include that the third state of the fuel has a temperature of about -110 °C and a pressure of about 1450 psi.

Optionally, the aircraft systems may include that the environmental control system further includes a heat exchanger assembly arranged in a ram air duct to receive mixed air from a mixer that combines the engine bleed air from the precooler and low pressure bleed air bled from a low pressure compressor of the engine.

Optionally, the aircraft systems may include that the first state of the fuel is a liquid phase and the third state of the fuel is a vapor phase.

Optionally, the aircraft systems may include that the cryogenic fuel is a supercritical fluid and the fuel does not change phase from the first state to the third state.

Optionally, the aircraft systems may include that the precooler further comprises at least one air layer and at least one fuel layer with a barrier layer arranged between the at least one air layer and the at least one fuel layer.

Optionally, the aircraft systems may include a sensor arranged within the barrier layer configured to detect a leak from at least one of the at least one air layer and the at least one fuel layer.

According to the invention, aircraft are provided. The aircraft comprises an aircraft system having the features described above.

Optionally, the aircraft may include that the first density is at least two times greater than the second density and the second density is at least two times greater than the third density.

Optionally, the aircraft may include that the engine bleed air is high pressure bleed air extracted from a high pressure compressor section of the engine.

Optionally, the aircraft may include that the engine bleed air has a temperature of about 470 °C when entering the second heat exchanger and has a temperature of 240 °C or less when exiting the first heat exchanger.

Optionally, the aircraft may include that the first state of the fuel is a cryogenic fuel having a temperature of about -250 °C and a pressure of about 145 psi, the second state of the fuel has a temperature of about -220 °C and a pressure of about 145 psi, and the third state of the fuel has a temperature of about -110 °C and

Optionally, the aircraft may include that the first state of the fuel is a cryogenic fuel having a temperature of about -250 °C and a pressure of about 1450 psi, the second state of the fuel has a temperature of about -220 °C and a pressure of about 1450 psi, and the third state of the fuel has a temperature of about -110 °C and a pressure of about 1450 psi.

Optionally, the aircraft may include that the environmental control system includes a heat exchanger assembly arranged in a ram air duct to receive mixed air from a mixer that combines the engine bleed air from the precooler and low pressure bleed air bled from a low pressure compressor of the engine.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1A is a schematic illustration of an aircraft that can incorporate various embodiments of the present disclosure;
FIG. 1B is a schematic illustration of a bay section of the aircraft of FIG. 1A;
FIG. 2A is a schematic illustration of a conventional aircraft system having an ECS;
FIG. 2B is an enlarged schematic of a precooler of the ECS of the aircraft system of FIG. 2A;
FIG. 3A is a schematic illustration of an aircraft system having an ECS in accordance with an embodiment of the present disclosure;
FIG. 3B is an enlarged schematic of a precooler of the ECS of the aircraft system of FIG. 3A; and
FIG. 4 is a schematic illustration of a portion of a precooler in accordance with an embodiment of the present disclosure.

### DETAILED DESCRIPTION

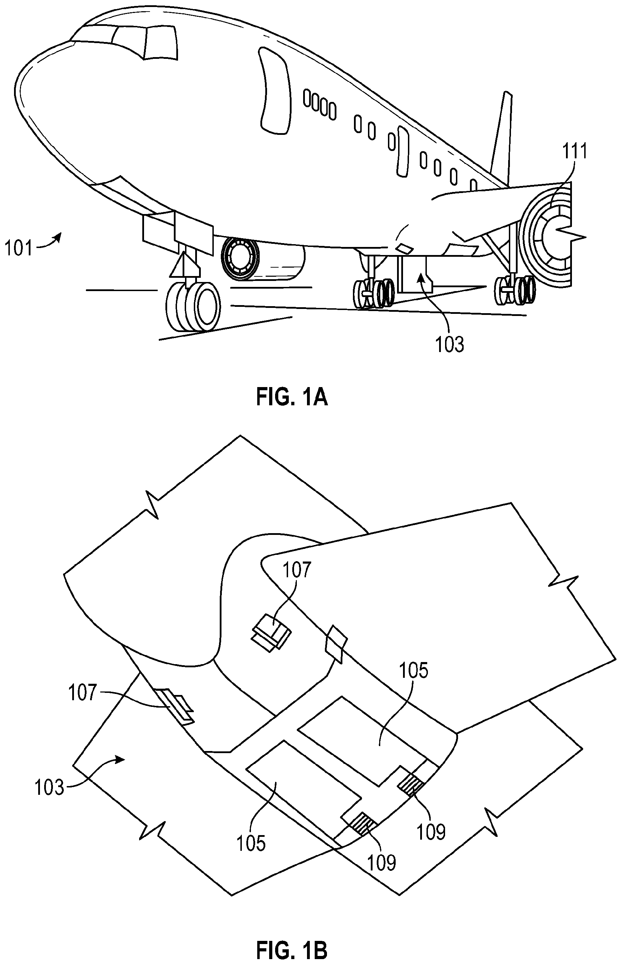

FIGS. 1A-1B are schematic illustrations of an aircraft 101 that can employ one or more embodiments of the present disclosure. As shown in FIGS. 1A-1B, the aircraft 101 includes bays 103 beneath a center wing box. The bays 103 can contain and/or support one or more components of the aircraft 101. For example, in some configurations, the aircraft 101 can include environmental control systems and/or fuel inerting systems within the bay 103. As shown in FIG. 1B, the bay 103 includes bay doors 105 that enable installation and access to one or more components (e.g., environmental control systems, fuel inerting systems, etc.). During operation of environmental control systems and/or fuel inerting systems of the aircraft 101, air that is external to the aircraft 101 can flow into one or more environmental control systems within the bay doors 105 through one or more ram air inlets 107. The air may then flow through the environmental control systems to be processed and supplied to various components or locations within the aircraft 101 (e.g., passenger cabin, fuel inerting systems, etc.). Some air may be exhausted through one or more ram air exhaust outlets 109.

Also shown in FIG. 1A, the aircraft 101 includes one or more engines 111. The engines 111 are typically mounted on wings of the aircraft 101 but may be located at other locations depending on the specific aircraft configuration. In some aircraft configurations, air can be bled from the engines 111 and supplied to environmental control systems (ECS) and/or fuel inerting systems, as will be appreciated by those of skill in the art. The engines 111 may be configured to generate both thrust for flight and electrical power generation for operation of electronics and/or other components onboard the aircraft 101.

Current aircraft ECS systems are typically driven by bleed air from the engine and utilize a precooler heat exchanger that cools the bleed air for use in the system. For example, such precoolers may be used to lower bleed air temperatures from about 450 °C to lower than 250 °C before the bleed air is introduced to an ECS primary heat exchanger. These precoolers may be configured to employ engine fan duct air to cool the pressurized bleed air. As a result, the precoolers may be arranged within or adjacent a fan duct and can result in drag on the engine. For example, in a non-limiting configuration, the precooler may be arranged just outside the fan duct. When not active, no cooling air passes through the precooler. However, when the precooler is active, fan air is bled from the fan duct, passed through the precooler, and thrown overboard. The overboard air does not provide thrust and subtracts from the total fan air used to create thrust. Furthermore, conventional aircraft engine fuels, such as jet A, have a maximum temperature limit (e.g., associated with flammability) and are thus not typically used as a cooling medium or working fluid.

In contrast, for aircraft that use cryogenic fuels, such as liquid hydrogen, the fuel may be maintained at temperatures less than -253 °C (about 20 K). In such systems, a precooler heat exchanger of an ECS can utilize the cold fuel to cool down bleed air. Accordingly, embodiments of the present disclosure are directed to the use of cryogenic fuels as a heat sink in precooler heat exchangers of aircraft ECS. Advantageously, embodiments of the present disclosure enable reduced size precooler heat exchangers, more packing flexibility for the precooler in the engine, safe use of liquid hydrogen (LH₂) and/or ammonia (NH₃) for ECS by using it in the engine precooler, and potential removal of one or more heat exchangers in the ECS itself. That is, the cooling provided by the use of cryogenic fuels can potentially replace one or more heat exchangers due to the cryogenic fuel acting as a heat sink provides a lot of heat capacity compared to conventional fan duct air cooled precoolers. Also, through this cooling process of the air, preheating or warming of the cryogenic fuel also occurs and thus can aid with attaining a required temperature in the main combustors which require fuel to be near 0 C (about 275 K). Advantageously, embodiments of the present disclosure may provide for a precooler size reduction of about three times as compared to current air cooled (fan duct) designs.

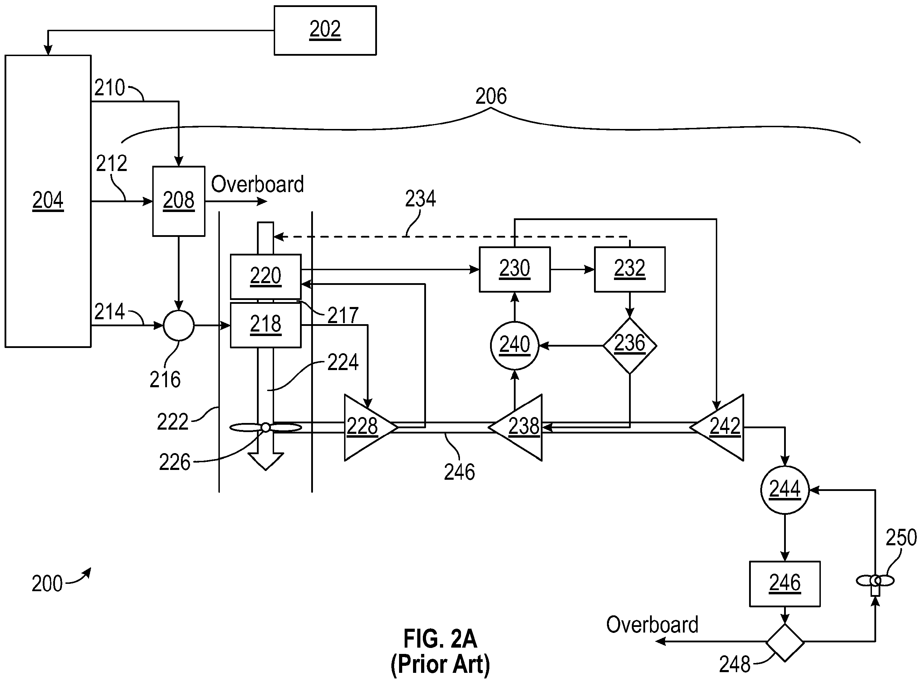

Turning to FIGS. 2A-2B, schematic illustrations of a conventional aircraft system 200 are shown. The aircraft system 200 includes a fuel tank 202, an engine 204 for consuming fuel from the fuel tank, and an ECS 206. It will be appreciated that the aircraft system 200 does not illustrate all components of these systems and/or all components and systems of an aircraft.

In this configuration, fuel from the fuel tank 202 is supplied into the engine 204 for combustion. Air is extracted or bled from one or more locations along the engine 204 and the air is used within the ECS 206. The ECS 206 includes a precooler 208 configured to receive high pressure bleed air from a high pressure bleed 210 which has relatively high pressure and relatively cool and low pressure bleed air from a fan bleed 212. The high pressure bleed 210 may be extracted from a core of the engine 204 (e.g., high pressure compressor of the engine 204). The air from the high pressure bleed 210 is thus cooled by the air from the fan bleed 212 which picks up heat from the air of the high pressure bleed 210. The air from the fan bleed 212 is then dumped overboard. A control valve 216 may be arranged to direct one of the cooled air from the high pressure bleed 210 or mid/low pressure air sourced from a low pressure bleed 214 (e.g., from a low pressure compressor of the engine 204) to downstream systems of the ECS 206.

The mixed bleed air is then passed through an ECS heat exchanger assembly 217, which includes a primary heat exchanger 218 and a secondary heat exchanger 220. The ECS heat exchanger assembly 217 is arranged within a ram air duct 222. The mixed bleed air is first passed into the primary heat exchanger 218 and cooled by ram air 224 within the ram air duct 222. The ram air 224 may be pulled through the ram air duct by a blower 226. The cooled air leaves the primary heat exchanger 218 and is increased in pressure in a compressor 228 and then passed into the secondary heat exchanger 220. It is noted that the ram air 224 at the secondary heat exchanger 220 will be cooler than the ram air that leaves the secondary heat exchanger 220 and enters the primary heat exchanger 218. As such, a progressive cooling and pressure control is achieved of the air within the ECS 206.

The cooled air will then exit the secondary heat exchanger 220 of the ECS heat exchanger assembly 217 and be directed to a condensing heat exchanger 230 and a water separator 232. As such, water may be removed from the air stream within the ECS 206. In some configurations, the condensed water 234 may be dumped into the ram air duct 222 upstream of the ECS heat exchanger assembly 217 to aid in thermal transfer between the ram air 224 and the bleed air sourced from the mixer 216.

The ECS air, after water removal, is separated at a splitter 236 such that a portion is passed through a first turbine 238 and mixed with the other portion at a mixed 240 and then passed to a second turbine 242. In some configurations, the blower 226, the compressor 228, the first turbine 238, and the second turbine 242 may all be arranged along and coupled to a common drive shaft 243. This ECS air is then mixed with a portion of cabin recirculated air at a mixer 244 and then supplied into a cabin 246 of the aircraft. The recirculation may be achieved using a splitter 248 and a recirculation fan 250 that directs a portion of air exhausted from the cabin 246 at the splitter 248 back to the mixer 244 upstream of the cabin 246. A portion of the cabin air may also be directed overboard, as illustratively shown. In other embodiments, the flow may be split within the cabin and no separate splitter downstream of the cabin may be used. In such configurations, the splitter 248 is the cabin itself. The cabin can include one or more recirculation intakes located somewhere in the cabin and a separate outflow valve may be used to control the overboard air flow.

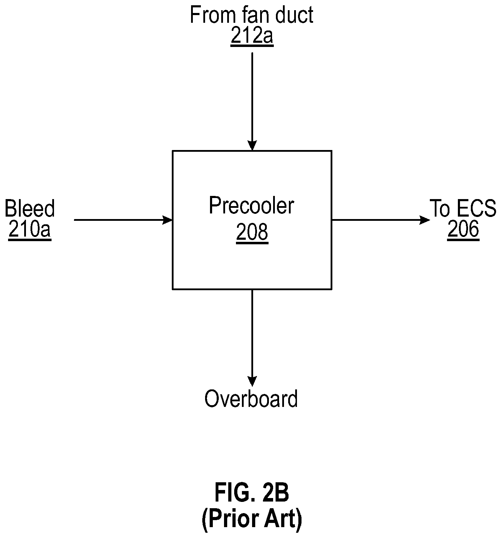

FIG. 2B illustrates an enlarged schematic of the precooler 208 of the ECS 206. As shown, high pressure bleed air 210a is directed into the precooler 208 as a first working fluid and relatively low pressure, cool fan bleed air 212a as a second working fluid. The fan bleed air 212a has relatively low pressure and temperature and thus cools the high pressure bleed air 210a, and thus operates to precool the air before it enters the rest of the ECS 206. The fan bleed air 212a is typically dumped overboard.

In contrast the to the air cooled precooler described with respect to FIGS. 2A-2B, embodiments of the present disclosure are directed to configurations of systems with a precooler heat exchanger that is configured to cool bleed air from an engine with a cryogenic two-phase fuel such as liquid hydrogen (LH₂) or liquid ammonia (HN₃). In accordance with some embodiments of the present disclosure, a precooler utilizes a cross-flow arrangement with two different heat exchangers. In some embodiments, the heat exchangers may be varied (e.g., channel or frontal area) for the fuel flow as the fuel turns from liquid to vapor or other fluid change (e.g., change in density) in the heat exchangers. In some embodiments, the fluid may be supercritical fluid (e.g., above the critical pressure) where distinct liquid and vapor phases do not exist. However, even if the phase does not change, the density still changes by an order of magnitude or more, and thus a phase change may not occur in all configurations.

Advantageously, such a configuration can aid in managing flow velocities and Mach number in the heat exchanger channels and/or layers as phase change or density change happens to the fuel. For example, LH₂ changes phase from liquid to vapor at around -245 °C (about 30 K). In other embodiments, although the phase stays constant (e.g., supercritical fluid), the density may undergo a significant change within the heat exchanger channels or layers. In some embodiments, the two heat exchangers of the precooler can be connected via simple fuel delivery manifolds or topology optimized manifolds that ensure desired fuel distribution from the first heat exchanger to the second heat exchanger.

In some configurations in accordance with the present disclosure, a counterflow arrangement may be employed in the heat exchangers of the precooler via additive manufacturing. In still other embodiments, multiple heat exchangers can be arranged in series to increase the fuel flow frontal area or the channels. Further still, layers in the heat exchangers can be increased gradually to manage the phase change of the fuel and the associated density reduction that can increase the flow velocity by 5-10 times, for example. Additionally, upstream mass flow controllers can be used to generate the desired amount of fuel and air flow rates through the precooler such that the phase change and/or density change process and location can be controlled within the precooler.

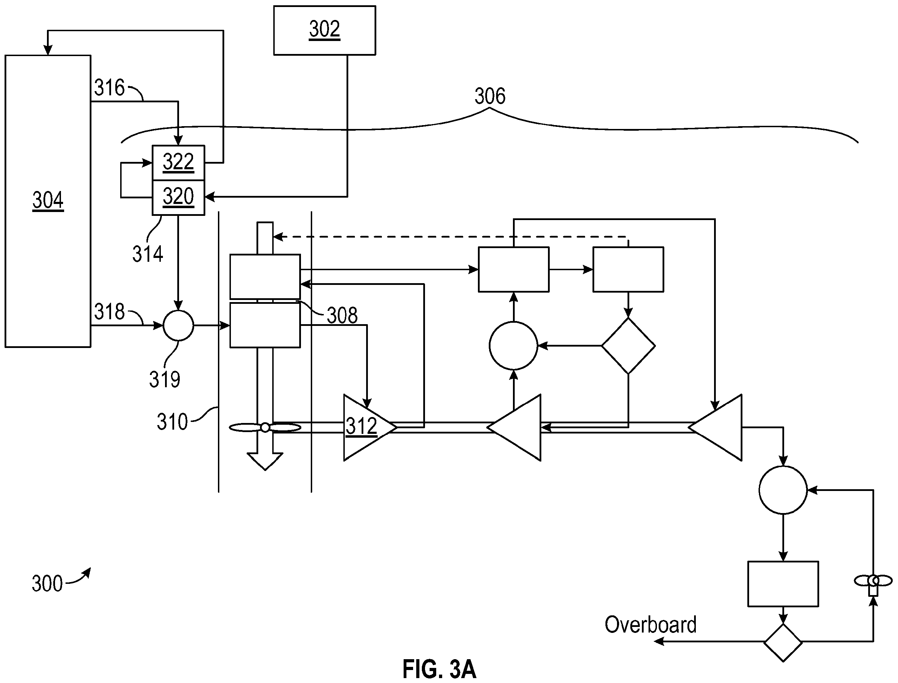

Turning now to FIGS. 3A-3B, schematic illustrations of an aircraft system 300 in accordance with an embodiment of the present disclosure are shown. The aircraft system 300 includes a fuel tank 302, an engine 304 for consuming fuel from the fuel tank, and an ECS 306. The ECS 306 is substantially similar to that shown and described with respect to FIG. 2A, having an ECS heat exchanger assembly 308 arranged in a ram air duct 310. Once the air passes through the ECS heat exchanger assembly 308, including through a compressor 312, the air is then similarly treated for water removal and temperature and pressure adjustment in similar downstream components, and thus these features will not be discussed again in detail.

The primary difference between the embodiment of FIG. 3A and 2A is the configuration of the precooler 314 of the aircraft system 300 as compared to the air-cooled precooler 208 of the aircraft system 200 of FIGS. 2A-2B. In the aircraft system 300, the fuel tank 302 is configured to contain a cryogenic fuel, such as LH₂. Instead of a single precooler heat exchanger arranged in a fan air duct, the aircraft system 300 of this embodiment includes a bifurcated or two-pass heat exchanger precooler 314. This configuration relies, in part, on the cold temperature fuel sourced from the fuel tank 302 to provide the pre-cooling of the bleed air rather than fan air of the engine 304.

In this configuration, high pressure air is bled from the engine 304 at a high pressure bleed 316, passed through the precooler 314, and then supplied into the heat exchanger assembly 308 of the ECS 306. When the precooler 314 is not used, low pressure air may be supplied into the heat exchanger assembly 308 of the ECS 306 from a low pressure bleed. The high pressure bleed 316 may be a bleed port arranged on the engine 304 at a location about a high pressure compressor of the engine 304 and the low pressure bleed 318 may be a bleed port arranged on the engine 304 at a location about a low pressure compressor of the engine 304. A control valve 319 may be arranged to direct one of the cooled air from the high pressure bleed 316 (after passing through the precooler 314) or mid/low pressure air sourced from the low pressure bleed 318 (e.g., from a low pressure compressor of the engine 304) to the heat exchanger assembly 308 of the ECS 306.

The cryogenic fuel from the fuel tank 302 is passed through a first heat exchanger 320 and then a second heat exchanger 322 of the precooler 314. The precooler 314 in this configuration is not arranged within a fan duct or bypass of the engine, and thus does not disrupt the airflow through the engine 304 and as a result does not impose losses on the efficiency of the engine 304. Further, the precooler 314 does not extract or require any air from the engine 304 as a cooling fluid and thus does not impose efficiency losses on the engine 304.

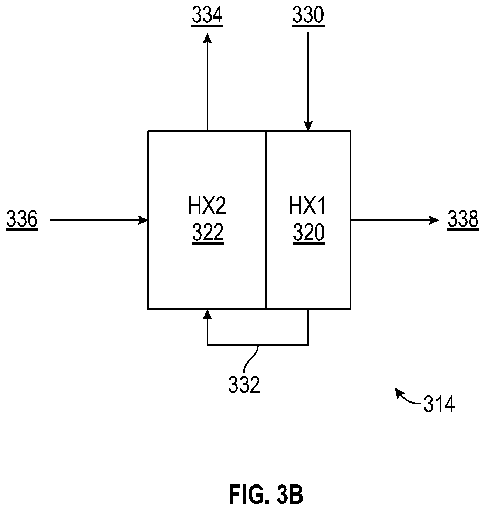

Referring to FIG. 3B, an enlarged schematic illustration of the precooler 314 is shown. In contrast to the precooler 208 of the embodiment shown in FIG. 2A, the precooler 314 of embodiments of the present disclosure is a two-pass or two-part heat exchanger assembly. Cold first state fuel 330 enters the first heat exchanger 320 and exits the first heat exchanger 320 as second state fuel 332. The second state fuel 332 will then enter the second heat exchanger 322 and be further warmed in the second heat exchanger 322 to generate third state fuel 334. As the cold, cryogenic fuel passes through the precooler 314 the temperature of the fuel will be increased through heat pick up and cause a density change of the fuel. For example, the first state fuel 330 may be a liquid and the second state fuel 332 may be a gas. The third state fuel 334 will also be a gas but having a higher temperature than the second state fuel 332. In other configurations, the first, second, and third fuel states may be defined or based on a fluid density, rather than a fluid phase. For example, in one non-limiting example, the first fuel state may have a density that is two to five times or greater than the density of the second fuel state, and the second fuel state may have a density that is two times or greater than the third fuel state. In some cases, the changes in density between the first fuel state to the second fuel state and/or the second fuel state to the third fuel state may be 100 times or even 1,000 times decrease in density. Such changes in density, rather than phase, may occur for supercritical fluids that are employed in systems as described herein. The fuel is warmed by thermally interacting with relatively high temperature bleed air 336 which enters the second heat exchanger 322 first and is cooled through the second heat exchanger 322 and then further cooled within the first heat exchanger 320 to generate precooled bleed air 338.

Because the first state fuel 330 enters the first heat exchanger 320 first, the other working fluid within the first heat exchanger 320 being slightly cooled bleed air, the thermal efficiency is relatively high, enabling cooling of the bleed air, while warming the fuel to become the second state fuel 332. This warmed second state fuel 322 then enters the second heat exchanger 322 which thermally interacts with the hot high temperature bleed air 336, thus further increasing the temperature of the fuel from the second state fuel 332 to the third state fuel 334, which can then be supplied into a combustor or otherwise consumed by an engine or power system. At the same time that the fuel is being heated, the bleed air is being cooled in preparation for supply into an ECS.

In one non-limiting example of an operation of the precooler 314, the first state fuel 330 may be supplied to the first heat exchanger 320 of the precooler 314 at about 145 psi and having a temperature of about -250 °C (about 25 K). In this example, the fluid is sub-critical, and thus has distinct phase changes (e.g., liquid to gas). As the first state fuel 330 passes through the first heat exchanger 320, the fuel will be warmed, resulting in the second state fuel 332 having a pressure of about 143 psi and a temperature of about -220 °C (about 55 K) and is suppled into the second heat exchanger 322 and is further heated therein. The third state fuel 334 may have a pressure of about 142 psi and a temperature of about -110 °C (about 160 K). At the same time, the bleed air passes through the second heat exchanger 322 and then the first heat exchanger 320. The high temperature bleed air 336 may enter the second heat exchanger 322 having a pressure of about 55 psia and a temperature of about 470 °C (about 740 K). As the bleed air flows through the precooler 314 the temperature will drop such that the precooled bleed air 338 has a temperature of about 240 °C (about 515 K) at about 53 psia. This precooled bleed air 338 is then mixed with low pressure bleed air and conveyed into the ECS 306 for processing and supply into a cabin or otherwise used onboard the aircraft.

In another non-limiting example of an operation of the precooler 314, the first state fuel 330 may be supplied to the first heat exchanger 320 of the precooler 314 at about 1450 psi and having a temperature of about -250 °C (about 25 K). In this configuration, the fluid is a supercritical fluid, and thus may not change phase within the heat exchanger, but still will undergo a density change. As the first state fuel 330 passes through the first heat exchanger 320, the fuel will be warmed, resulting in the second state fuel 332 having a pressure of about 1450 psi and a temperature of about - 180 °C (about 90 K) and is suppled into the second heat exchanger 322 and is further heated therein. The third state fuel 334 may have a pressure of about 1450 psi and a temperature of about -105 °C (about 170 K). At the same time, the bleed air passes through the second heat exchanger 322 and then the first heat exchanger 320. The high temperature bleed air 336 may enter the second heat exchanger 322 having a pressure of about 55 psia and a temperature of about 470 °C (about 740 K). As the bleed air flows through the precooler 314 the temperature will drop such that the precooled bleed air 338 has a temperature of about 240 °C (about 515 K) at about 53 psia. This precooled bleed air 338 is then mixed with low pressure bleed air and conveyed into the ECS 306 for processing and supply into a cabin or otherwise used onboard the aircraft.

In each of these example configurations, the pressure of the fuel does not substantially change when passing through the precooler 314. However, as is apparently, the temperature of the fuel is significantly increased, rising to levels appropriate for combustion of the fuel, or for other consumption uses (e.g., in a fuel cell). At the same time, the hot bleed air is significantly reduced in temperature to levels that are appropriate for use in the ECS 306. This temperature drop is achieved by the dual-pass precooler 314 that employs the cryogenic fuel as a working fluid to cool the bleed air and precool such air. This is achieved with the need for fan air being used as the cooling medium, and thus no structures are required to be installed within a fan bypass and/or no bleed ports are required on the fan bypass/fan duct. As a result, losses associated with such structure (e.g., in the configuration of FIG. 2A) may be avoided.

In accordance with some embodiments of the present disclosure, the precooler may be arranged as a two-pass configuration for ECS that can use cross-flow plate-fin heat exchangers. The disclosed precooler provides a heat exchanger assembly configuration that can convert a fuel from a liquid phase to a gaseous or vapor phase. In such configurations, the structural configuration of the first heat exchanger (e.g., first heat exchanger 320) is arranged and selected for liquid fuel. In contrast, the second heat exchanger (e.g., second heat exchanger 322) is structurally different and configured to receive vapor or gaseous fuel as the working fluid. By structurally configuring the two heat exchangers to be specific to the phase state of the fuel, flow velocities through the heat exchangers can be managed as the phase change occurs and a density of fuel reduces. As such, choked flow on the fuel side of the heat exchangers can be avoided.

In some non-limiting embodiments, the first heat exchanger 320 and the second heat exchanger 322 may be configured to achieve a substantially constant flow velocity of the fuel through each of the two heat exchangers of the precooler 314. Because the liquid fuel in the first heat exchanger 320 will have a high density, the physical structure will be different than the second heat exchanger 322 that works with a vapor or gaseous fuel. Further, the heat exchangers 320, 322 may be configured to have minimal pressure drop in the transition between the first heat exchanger 320 and the second heat exchanger 322.

Because the cooling capacity of the liquid cryogenic fuel is significantly greater than the cooling capacity of fan air in convention ECS precooler systems, a weight and volume savings may be achieved. For example, an overall weight reduction of three times can be achieved by using the cryogenic fuel in the ECS precooler as compared to the heat exchangers using fan air.

In accordance with some embodiments. barrier layers in the precooler heat exchangers can be used to avoid any fuel leaks into the bleed air flow. For example, a barrier layers may be configured as a layer of fins or other structures between the fuel and air layers in a plate-fin heat exchanger. If the event of a leak from the fuel side, into the barrier layer, such leak may be detected using an appropriate sensor (e.g., pressure, chemical, etc.) and action can be taken (e.g., generate notification, change flow rates, etc.). When no leak is present, there is typically no flow in the barrier layer(s), and such barrier layer is provided to ensure that fuel does not leak into an air stream that will be supplied to a cabin of an aircraft.

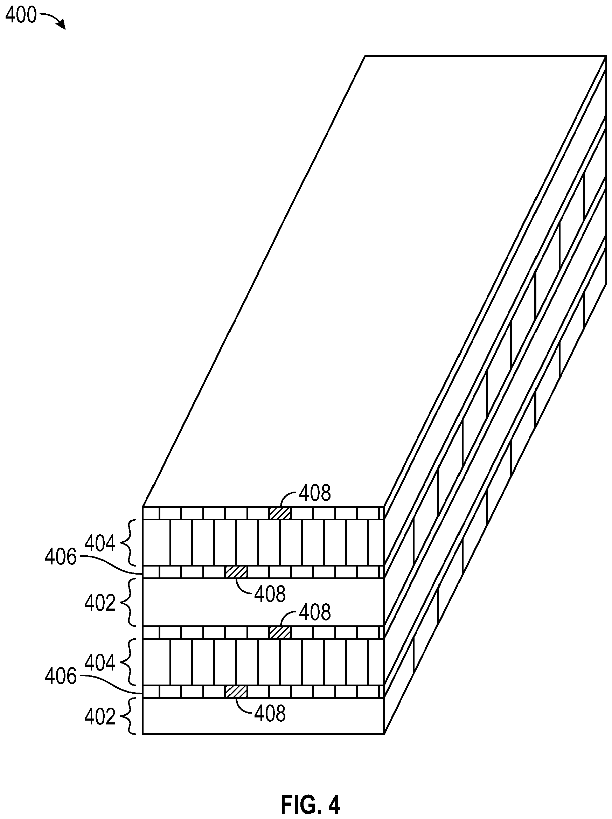

For example, turning to FIG. 4, a schematic illustration of a portion of a precooler heat exchanger 400 is shown. The precooler heat exchanger 400, in this non-limiting embodiment, is formed of a series of alternating air and fuel portions, arranged to allow for thermal communication between the two fluids. As shown, the precooler heat exchanger 400 includes a plurality of air layers 402 and a plurality of fuel layers 404. Arranged between the air layers 402 and the fuel layers 404 are barrier layers 406. The barrier layers 406 may be formed of plate fins or pins with a vacuum or inert gas sealed therein. The fins or pins enable thermal communication between the air within the air layers 402 and the fuel within the fuel layers 404. The barrier layers 406 may be provided to ensure that any leaks from one of the other layers (air layers 402, fuel layers 404) does not enter into the other layer, thus avoiding bleed of one fluid into and mixing with the fluid of the other. Further, in some configurations, the barrier layers 406 may include one or more sensors 408 within the barrier layer 406. Such sensors 408 may be arranged to detect leaks of fluids into the barrier layer 406 from the air layers 402 and/or the fuel layers 404.

Advantageously, embodiments described herein provide for improved cooling systems for aircraft environmental control systems (ECS). In accordance with embodiments of the present disclosure, a convention air-to-air precooler is replaced by a fuel-to-air precooler heat exchanger. Aircraft efficiencies are realized through eliminating the use of bleed air from a fan bypass for precooling air used in an aircraft ECS. As such, losses associated with the precooler coupled to the engine fan system may be avoided. Additionally, the cooling provided by a cryogenic fuel, as described herein, enables air temperatures that are appropriate for use in aircraft ECS, without requiring wasted heat. Additionally, an added benefit of such systems is that the cryogenic fuel may be heated to appropriate temperatures for fuel consumption (e.g., combustion, fuel cell, etc.). Additionally, such heat exchanger arrangements can also be used to pre-heat cryogenic fuel, such as liquid hydrogen for use in a fuel cell-based power generation systems.

The use of the terms "a," "an," "the," and similar references in the context of description (especially in the context of the following claims) are to be construed to cover both the singular and the plural, unless otherwise indicated herein or specifically contradicted by context. The modifier "about," "substantially," and/or "approximately" used in connection with a quantity is inclusive of the stated value and has the meaning dictated by the context (e.g., it includes the degree of error associated with measurement of the particular quantity). All ranges disclosed herein are inclusive of the endpoints, and the endpoints are independently combinable with each other.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments.

Accordingly, the present disclosure is not to be seen as limited by the foregoing description but is only limited by the scope of the appended claims.

## Claims

1. An aircraft system comprising:
a fuel tank (302) containing a cryogenic fuel;
an engine (304) configured to consume the cryogenic fuel; and
an environmental control system including a precooler (314) arranged along a flow path between the fuel tank (302) and the engine (304), the precooler (314) configured to receive the cryogenic fuel as a first working fluid and engine bleed air as a second working fluid,
wherein the precooler (314) comprises:
a first heat exchanger (320) configured to receive the cryogenic fuel at a first state and output the cryogenic fuel at a second state; and
a second heat exchanger (322) configured to receive the cryogenic fuel at the second state and output the cryogenic fuel at a third state,
wherein the first state of the fuel has a first density, the second state of the fuel has a second density, and the third state of the fuel has a third density, wherein the first density is greater than the second density, and the second density is greater than the third density, and
wherein the engine bleed air is directed through the second heat exchanger (322) of the precooler (314) first and then through the first heat exchanger (320) of the precooler (314)

2. The system of claim 1, wherein the first density is at least two times greater than the second density and the second density is at least two times greater than the third density.

3. The system of claim 1 or 2, wherein the engine bleed air is high pressure bleed air extracted from a high pressure compressor section of the engine (204, 304).

4. The system of claim 3, wherein the engine bleed air has a temperature of about 470 °C when entering the second heat exchanger (322) and has a temperature of 240 °C or less when exiting the first heat exchanger (320).

5. The system of any preceding claim, wherein the first state of the fuel is a cryogenic fuel having a temperature of about -250 °C and a pressure of about 145 psi (10⁶ Pa), and/or wherein the second state of the fuel has a temperature of about -220 °C and a pressure of about 145 psi, and/or wherein the third state of the fuel has a temperature of about -110 °C and a pressure of about 145 psi.

6. The system of any of claims 1 to 4, wherein the first state of the fuel is a cryogenic fuel having a temperature of about -250 °C and a pressure of about 1450 psi (10⁷ Pa), and/or wherein the second state of the fuel has a temperature of about -220 °C and a pressure of about 1450 psi, and/or wherein the third state of the fuel has a temperature of about -110 °C and a pressure of about 1450 psi.

7. The system of any preceding claim, wherein the environmental control system further comprises:
a heat exchanger assembly (308) arranged in a ram air duct to receive mixed air from a mixer that combines the engine bleed air from the precooler (314) and low pressure bleed air bled from a low pressure compressor of the engine (304).

8. The system of any preceding claim, wherein the first state of the fuel is a liquid phase and the third state of the fuel is a vapor phase.

9. The system of any preceding claim, wherein the cryogenic fuel is a supercritical fluid and the fuel does not change phase from the first state to the third state.

10. The system of any preceding claim, wherein the precooler (314) further comprises at least one air layer and at least one fuel layer with a barrier layer arranged between the at least one air layer and the at least one fuel layer, and optionally further comprising a sensor arranged within the barrier layer configured to detect a leak from at least one of the at least one air layer and the at least one fuel layer.

11. An aircraft comprising an aircraft system of any preceding claim.

12. The aircraft of claim 11, wherein the engine bleed air is high pressure bleed air extracted from a high pressure compressor section of the engine (304).

13. The aircraft of claim 11 or 12, wherein the first state of the fuel is a cryogenic fuel having a temperature of about -250 °C and a pressure of about 145 psi (10⁶ Pa), the second state of the fuel has a temperature of about -220 °C and a pressure of about 145 psi, and the third state of the fuel has a temperature of about -110 °C and a pressure of about 145 psi.

14. The aircraft of claim 11 or 12, wherein the first state of the fuel is a cryogenic fuel having a temperature of about -250 °C and a pressure of about 1450 psi (10⁷ Pa), the second state of the fuel has a temperature of about -220 °C and a pressure of about 1450 psi, and the third state of the fuel has a temperature of about -110 °C and a pressure of about 1450 psi.

15. The aircraft of any of claims 11 to 14, wherein the environmental control system further comprises:
a heat exchanger assembly arranged in a ram air duct to receive mixed air from a mixer that combines the engine bleed air from the precooler (314) and low pressure bleed air bled from a low pressure compressor of the engine (304).

## Patentansprüche

1. Flugzeugsystem, umfassend:
einen Kraftstofftank (302), der einen kryogenen Kraftstoff enthält;
ein Triebwerk (304), das zum Verbrauchen von kryogenem Kraftstoff konfiguriert ist; und
ein Klimatisierungssystem, das einen Vorkühler (314) beinhaltet, der entlang eines Strömungswegs zwischen dem Kraftstofftank (302) und dem Motor (304) angeordnet ist, wobei der Vorkühler (314) zum Aufnehmen des kryogenen Kraftstoffs als erstes Arbeitsfluid und von Triebwerkzapfluft als zweites Arbeitsfluid konfiguriert ist,
wobei der Vorkühler (314) Folgendes umfasst:
einen ersten Wärmetauscher (320), der zum Aufnehmen des kryogenen Kraftstoffs in einem ersten Zustand und zum Ausgeben des kryogenen Kraftstoffs in einem zweiten Zustand konfiguriert ist; und
einen zweiten Wärmetauscher (322), der zum Aufnehmen des kryogenen Kraftstoffs in dem zweiten Zustand und zum Ausgeben des kryogenen Kraftstoffs in einem dritten Zustand konfiguriert ist,
wobei der erste Zustand des Kraftstoffs eine erste Dichte aufweist, der zweite Zustand des Kraftstoffs eine zweite Dichte aufweist und der dritte Zustand des Kraftstoffs eine dritte Dichte aufweist, wobei die erste Dichte größer als die zweite Dichte ist und die zweite Dichte größer als die dritte Dichte ist, und
wobei die Triebwerkszapfluft zuerst durch den zweiten Wärmetauscher (322) des Vorkühlers (314) und dann durch den ersten Wärmetauscher (320) des Vorkühlers (314) geleitet wird.

2. System nach Anspruch 1, wobei die erste Dichte mindestens doppelt so groß wie die zweite Dichte ist und die zweite Dichte mindestens doppelt so groß wie die dritte Dichte ist.

3. System nach Anspruch 1 oder 2, wobei die Triebwerkszapfluft Hochdruckzapfluft ist, die aus einem Hochdruckkompressorabschnitt des Triebwerks (204, 304) entnommen wird.

4. System nach Anspruch 3, wobei die Triebwerkszapfluft beim Eintritt in den zweiten Wärmetauscher (322) eine Temperatur von etwa 470 °C und beim Austritt aus dem ersten Wärmetauscher (320) eine Temperatur von 240 °C oder weniger aufweist.

5. System nach einem der vorstehenden Ansprüche, wobei der erste Zustand des Kraftstoffs ein kryogener Kraftstoff ist, der eine Temperatur von etwa -250 °C und einem Druck von etwa 145 psi (10⁶ Pa) aufweist, und/oder wobei der zweite Zustand des Kraftstoffs eine Temperatur von etwa -220 °C und einen Druck von etwa 145 psi aufweist und/oder wobei der dritte Zustand des Kraftstoffs eine Temperatur von etwa -110 °C und einen Druck von etwa 145 psi aufweist.

6. System nach einem der Ansprüche 1 bis 4, wobei der erste Zustand des Kraftstoffs ein kryogener Kraftstoff ist, der eine Temperatur von etwa -250 °C und einen Druck von etwa 1450 psi (10⁷ Pa) aufweist, und/oder wobei der zweite Zustand des Kraftstoffs eine Temperatur von etwa -220 °C und einen Druck von etwa 1450 psi aufweist und/oder wobei der dritte Zustand des Kraftstoffs eine Temperatur von etwa -110 °C und einen Druck von etwa 1450 psi aufweist.

7. System nach einem der vorstehenden Ansprüche, wobei das Klimatisierungssystem ferner Folgendes umfasst:
eine Wärmetauscheranordnung (308), die in einem Stauluftkanal angeordnet ist, um Mischluft von einem Mischer zu empfangen, der die Triebwerkszapfluft von dem Vorkühler (314) und Niederdruckzapfluft, die von einem Niederdruckkompressor des Triebwerks (304) abgezapft wird, kombiniert.

8. System nach einem der vorstehenden Ansprüche, wobei der erste Zustand des Kraftstoffs eine flüssige Phase und der dritte Zustand des Kraftstoffs eine Dampfphase ist.

9. System nach einem der vorstehenden Ansprüche, wobei der kryogene Kraftstoff ein überkritisches Fluid ist und der Kraftstoff seine Phase nicht von dem ersten in den dritten Zustand ändert.

10. System nach einem der vorstehenden Ansprüche, wobei der Vorkühler (314) ferner mindestens eine Luftschicht und mindestens eine Kraftstoffschicht mit einer zwischen der mindestens einen Luftschicht und der mindestens einen Kraftstoffschicht angeordneten Sperrschicht umfasst und optional ferner einen innerhalb der Sperrschicht angeordneten Sensor umfasst, der zum Erkennen eines Lecks in mindestens einer der mindestens einen Luftschicht und der mindestens einen Kraftstoffschicht konfiguriert ist.

11. Flugzeug, das ein Flugzeugsystem nach einem der vorstehenden Ansprüche umfasst.

12. Flugzeug nach Anspruch 11, wobei die Triebwerkszapfluft Hochdruckzapfluft ist, die aus einem Hochdruckkompressorabschnitt des Triebwerks (304) entnommen wird.

13. Flugzeug nach einem Anspruch 11 oder 12, wobei der erste Zustand des Kraftstoffs ein kryogener Kraftstoff ist, der eine Temperatur von etwa -250 °C und einem Druck von etwa 145 psi (10⁶ Pa) aufweist, der zweite Zustand des Kraftstoffs eine Temperatur von etwa -220 °C und einen Druck von etwa 145 psi aufweist und der dritte Zustand des Kraftstoffs eine Temperatur von etwa -110 °C und einen Druck von etwa 145 psi aufweist.

14. Flugzeug nach einem Anspruch 11 oder 12, wobei der erste Zustand des Kraftstoffs ein kryogener Kraftstoff ist, der eine Temperatur von etwa -250 °C und einem Druck von etwa 1450 psi (10⁷ Pa) aufweist, der zweite Zustand des Kraftstoffs eine Temperatur von etwa -220 °C und einen Druck von etwa 1450 psi aufweist und der dritte Zustand des Kraftstoffs eine Temperatur von etwa -110 °C und einen Druck von etwa 1450 psi aufweist.

15. Flugzeug nach einem der Ansprüche 11 bis 14, wobei das Klimatisierungssystem ferner Folgendes umfasst:
eine Wärmetauscheranordnung, die in einem Stauluftkanal angeordnet ist, um Mischluft von einem Mischer zu empfangen, der die Triebwerkszapfluft von dem Vorkühler (314) und Niederdruckzapfluft, die von einem Niederdruckkompressor des Triebwerks (304) abgezapft wird, kombiniert.

## Revendications

1. Système d'aéronef comprenant :
un réservoir de carburant (302) contenant un carburant cryogénique ;
un moteur (304) conçu pour consommer le carburant cryogénique ; et
un système de régulation climatique comportant un pré-refroidisseur (314) disposé le long d'un trajet d'écoulement entre le réservoir de carburant (302) et le moteur (304), le pré-refroidisseur (314) étant conçu pour recevoir le carburant cryogénique en tant que premier fluide de travail et l'air de prélèvement du moteur en tant que second fluide de travail,
dans lequel le pré-refroidisseur (314) comprend :
un premier échangeur de chaleur (320) conçu pour recevoir le carburant cryogénique dans un premier état et délivrer le carburant cryogénique dans un deuxième état ; et
un second échangeur de chaleur (322) conçu pour recevoir le carburant cryogénique dans le deuxième état et délivrer le carburant cryogénique dans un troisième état,
dans lequel le premier état du carburant a une première densité, le deuxième état du carburant a une deuxième densité et le troisième état du carburant a une troisième densité, dans lequel la première densité est supérieure à la deuxième densité, et la deuxième densité est supérieure à la troisième densité, et
dans lequel l'air de prélèvement du moteur est dirigé d'abord à travers le second échangeur de chaleur (322) du pré-refroidisseur (314), puis à travers le premier échangeur de chaleur (320) du pré-refroidisseur (314).

2. Système selon la revendication 1, dans lequel la première densité est au moins deux fois supérieure à la deuxième densité et la deuxième densité est au moins deux fois supérieure à la troisième densité.

3. Système selon la revendication 1 ou 2, dans lequel l'air de prélèvement du moteur est de l'air de prélèvement haute pression extrait d'une section de compresseur haute pression du moteur (204, 304).

4. Système selon la revendication 3, dans lequel l'air de prélèvement du moteur a une température d'environ 470 °C lorsqu'il entre dans le second échangeur de chaleur (322) et a une température de 240 °C ou moins lorsqu'il sort du premier échangeur de chaleur (320).

5. Système selon une quelconque revendication précédente, dans lequel le premier état du carburant est un carburant cryogénique ayant une température d'environ -250 °C et une pression d'environ 145 psi (10⁶ Pa), et/ou dans lequel le deuxième état du carburant a une température d'environ -220 °C et une pression d'environ 145 psi, et/ou dans lequel le troisième état du carburant a une température d'environ -110 °C et une pression d'environ 145 psi.

6. Système selon l'une quelconque des revendications 1 à 4, dans lequel le premier état du carburant est un carburant cryogénique ayant une température d'environ -250 °C et une pression d'environ 1450 psi (10⁷ Pa), et/ou dans lequel le deuxième état du carburant a une température d'environ -220 °C et une pression d'environ 1450 psi, et/ou dans lequel le troisième état du carburant a une température d'environ -110 °C et une pression d'environ 1450 psi.

7. Système selon une quelconque revendication précédente, dans lequel le système de régulation climatique comprend en outre :
un ensemble échangeur de chaleur (308) disposé dans un conduit d'air dynamique pour recevoir de l'air mélangé provenant d'un mélangeur qui combine l'air de prélèvement du moteur provenant du pré-refroidisseur (314) et l'air de prélèvement basse pression provenant d'un compresseur basse pression du moteur (304).

8. Système selon une quelconque revendication précédente, dans lequel le premier état du carburant est une phase liquide et le troisième état du carburant est une phase vapeur.

9. Système selon une quelconque revendication précédente, dans lequel le carburant cryogénique est un fluide supercritique et le carburant ne change pas de phase du premier état au troisième état.

10. Système selon une quelconque revendication précédente, dans lequel le pré-refroidisseur (314) comprend en outre au moins une couche d'air et au moins une couche de carburant avec une couche barrière disposée entre l'au moins une couche d'air et l'au moins une couche de carburant, et comprenant éventuellement en outre un capteur disposé à l'intérieur de la couche barrière conçu pour détecter une fuite provenant d'au moins l'une parmi l'au moins une couche d'air et l'au moins une couche de carburant.

11. Aéronef comprenant un système d'aéronef selon une quelconque revendication précédente.

12. Aéronef selon la revendication 11, dans lequel l'air de prélèvement du moteur est de l'air de prélèvement haute pression extrait d'une section de compresseur haute pression du moteur (304) .

13. Aéronef selon la revendication 11 ou 12, dans lequel le premier état du carburant est un carburant cryogénique ayant une température d'environ -250 °C et une pression d'environ 145 psi (10⁶ Pa), le deuxième état du carburant a une température d'environ -220 °C et une pression d'environ 145 psi, et le troisième état du carburant a une température d'environ -110 °C et une pression d'environ 145 psi.

14. Aéronef selon la revendication 11 ou 12, dans lequel le premier état du carburant est un carburant cryogénique ayant une température d'environ -250 °C et une pression d'environ 1450 psi (10⁷ Pa), le deuxième état du carburant a une température d'environ -220 °C et une pression d'environ 1450 psi, et le troisième état du carburant a une température d'environ -110 °C et une pression d'environ 1450 psi.

15. Aéronef selon l'une quelconque des revendications 11 à 14, dans lequel le système de régulation climatique comprend en outre :
un ensemble échangeur de chaleur disposé dans un conduit d'air dynamique pour recevoir de l'air mélangé provenant d'un mélangeur qui combine l'air de prélèvement du moteur provenant du pré-refroidisseur (314) et l'air de prélèvement basse pression prélevé d'un compresseur basse pression du moteur (304) .
